# FASCICULE DE BREVET EUROPEEN

(11) **EP 3 538 483 B1**
(45) Date de publication et mention de la délivrance du brevet: **21.10.2020**
(21) Numéro de dépôt: 17809335.7
(22) Date de dépôt: 14.11.2017
(51) Int. Cl.: C01B 3/38, F25J 1/02, F25J 1/00

(54) **PROCÉDÉ DE PRODUCTION DE GAZ DE SYNTHÈSE POUR LA MISE EN UVRE D'UNE LIQUÉFACTION DE GAZ NATUREL**
SYNTHESEGASERZEUGUNGSVERFAHREN ZUR IMPLEMENTIERUNG VON ERDGASVERFLÜSSIGUNG
SYNTHESIS GAS PRODUCTION PROCESS FOR THE IMPLEMENTATION OF A NATURAL GAS LIQUEFACTION

(30) Priorité: 14.11.2016 FR 1660986
(43) Date de publication de la demande: 18.09.2019
(73) Titulaire: L'Air Liquide Société Anonyme pour l'Etude et l'Exploitation des Procédés Georges Claude, 75007 Paris (FR)
(72) Inventeur: COSTA DE BEAUREGARD, Pierre, 92130 Issy Les Moulineaux (FR); MARTY, Pascal, 94360 Bry Sur Marne (FR); MOREL, Thomas, 94500 Champigny-sur-Marne (FR)
(74) Mandataire: Grout de Beaufort, François-Xavier
(86) Numéro de dépôt international: PCT/FR2017/053100
(87) Numéro de publication internationale: WO 2018/087496

(56) Documents cités:
- WO-A1-98/36038
- WO-A1-2008/079802
- GEIJSEL J I ET AL: "SYNERGIES BETWEEN LNG AND GAS TO LIQUIDS CONVERSION//SYNERGIES ENTRE LE GNL ET LA CONVERSION DU GAZ EN LIQUIDES", INTERNATIONAL CONFERENCE AND EXHIBITION ON LIQUEFIED NATURAL GAS, XX, XX, 1 janvier 2001 (2001-01-01), pages PS2-5.01, XP001146430,
- SAWCHUK J ET AL: "ENHANCED PROCESS INTEGRATION BETWEEN LNG AND GTP PLANTS", INTERNATIONAL CONFERENCE ON LNG, , vol. 14TH 1 mars 2006 (2006-03-01), pages PO-41/1, XP009108045, Extrait de l'Internet: URL:http://www.kgu.or.kr/admin/data/P-000/ 8-PO-41-Sawchuk.pdf [extrait le 2017-02-24]
- Peter Häussinger ET AL: "Hydrogen, 2. Production" In: "Ullmann's Encyclopedia of Industrial Chemistry", 15 octobre 2011 (2011-10-15), Wiley-VCH Verlag GmbH & Co. KGaA, Weinheim, Germany, XP055097269, ISBN: 978-3-52-730673-2 page 1,43,44,306, DOI: 10.1002/14356007.o13_o03, page 260, section 1.3.2 "Tubular Reformer" page 267, section "Feed Preheating and Desulfurization" page 269, section 1.3.5 "Autothermal Reactors"

## Description

La présente invention concerne un procédé de liquéfaction d'un courant d'hydrocarbures tel que le gaz naturel en combinaison d'un procédé de production de gaz de synthèse.

L'invention concerne une intégration d'un procédé de liquéfaction de gaz naturel dans un procédé de production de gaz de synthèse par réformage à la vapeur d'eau surchauffée, oxydation partielle ou réformage autothermique.

Ces technologies de production de gaz de synthèse nécessitent parfois l'utilisation de grandes quantités de gaz naturel utilisées comme courant d'alimentation mais aussi comme source de chauffe du procédé.

Il est aussi souhaitable de liquéfier le gaz naturel pour un certain nombre de raisons. A titre d'exemple, le gaz naturel peut être stocké et transporté sur de longues distances plus facilement à l'état liquide que sous forme gazeuse, car il occupe un volume plus petit pour une masse donnée et n'a pas besoin d'être stocké à une pression élevée.

Les procédés de génération de gaz de synthèse ont en général comme produits finis l'hydrogène, le monoxyde de carbone ou un mélange des deux (appelé « oxogas », voire un mélange H₂/CO/CO₂ (production de méthanol) ou un mélange N₂/H₂ (production d'ammoniaque). Chacun de ces procédés co-génère en outre de la vapeur plus ou moins surchauffée.

Après une unité de comptage et éventuellement de compression ou décompression, la production de gaz de synthèse inclut généralement les étapes suivantes :
1. Une étape de désulfurisation à chaud : après une pré-chauffe (350-400°C), tous les dérivés soufrés contenus dans le gaz naturel sont transformés en H₂S par catalyse dans un réacteur d'hydrogénation (CoMox). Puis l'H₂S est retiré par catalyse (sur lit de ZnO par exemple).
2. Une étape de pré-reformage éventuelle (étape principalement présente dans les unités de réformage à la vapeur) : à haute température (500-550°C environ) avec excès de vapeur. Puis en présence de catalyseur : conversion des chaines hydrocarbonées contenant au moins deux atomes de carbone en méthane avec co-production de monoxyde de carbone, de dioxyde de carbone (CO₂) et d'hydrogène.
3. Etape de reformage qui consiste à faire réagir à haute température (850-950°C) les hydrocarbures avec de la vapeur d'eau pour produire de l'hydrogène, du CO et du CO₂.

En aval des unités de production de gaz de synthèse, les produits généralement valorisés sont le monoxyde de carbone (CO), l'hydrogène (H₂) ou un mélange H₂/CO

Le cas échéant, la dernière étape du procédé de production de gaz de synthèse peut également être une :
- Etape d'oxydation partielle sur lit catalytique (réformeur autothermique) qui consiste à faire réagir l'oxygène avec les hydrocarbures à haute température (800-1200°C) pour produire davantage de CO
- Une étape de conversion du CO en H₂ dans un réacteur catalytique dans le cas d'une production poussée d'hydrogène ;

La purification du gaz de synthèse produit peut alors être faite soit par :
- Une mise en œuvre d'un PSA pour purifier le flux riche en hydrogène produit ; ou
- Un lavage aux amines pour extraire le CO₂ du gaz de synthèse dans les cas de production de CO ou d'oxogas ; et
- Une purification dans une boîte froide du flux riche en CO produit ; ou
- Le passage du gaz produit à travers une membrane pour ajuster le ratio H₂/CO requis pour la qualité de l'oxogas à produire.

Par ailleurs, de manière générale, les unités de liquéfaction de gaz naturel permettent de mettre en œuvre un procédé de liquéfaction comprenant généralement les trois étapes suivantes :
1. Un « prétraitement » qui élimine du gaz naturel à liquéfier les impuretés susceptibles de geler (H₂O, CO₂, dérivés soufrés, mercure etc...) ;
2. Extraction des hydrocarbures lourds et des dérivés aromatiques pouvant geler lors de la liquéfaction. Cette étape peut avoir lieu en amont ou en parallèle de la liquéfaction ;
3. Liquéfaction par refroidissement du gaz naturel à une température cryogénique (typiquement -160°C) grâce à un cycle réfrigérant et éventuellement accompagnée également d'un retrait des hydrocarbures lourds / dérivés aromatiques susceptibles de geler. WO 01/10979 décrit un procédé de liquéfaction de gaz naturel en combinaison avec un procédé de production de gaz de synthèse.

Les inventeurs de la présente invention ont mis au point une solution permettant une valorisation de la vapeur produite et disponible en excès dans les procédés de génération de gaz de synthèse au sein du procédé de liquéfaction du gaz naturel. Cette intégration entre les deux procédés présente de nombreux avantages de synergies.

La présente invention a pour objet un procédé de liquéfaction de gaz naturel en combinaison d'un procédé de production de gaz de synthèse, le procédé de liquéfaction comprenant les étapes suivantes :
- Etape a) : prétraitement d'un gaz naturel d'alimentation afin d'éliminer les impuretés susceptibles de geler au cours du procédé de liquéfaction ;
- Etape b) : extraction, à partir du courant gazeux issu de l'étape a), d'un courant enrichi en hydrocarbures ayant plus de deux atomes de carbone ;
- Etape c) : liquéfaction du courant gazeux appauvri en hydrocarbures ayant plus de deux atomes de carbone issu de l'étape b) ;
   le procédé de production de gaz de synthèse comprenant les étapes suivantes :
- Etape a') : désulfurisation à une température supérieure à 350°C d'un courant d'alimentation de gaz naturel ;
- Etape b') : pré-réformage facultatif, à une température supérieure à 500°C afin de convertir les chaînes hydrocarbures contenant au moins deux atomes de carbone du courant gazeux issu de l'étape a') en méthane ;
- Etape c') : réformage consistant à faire réagir à une température supérieure à 800°C le courant gazeux issu de l'étape a') ou b') avec de la vapeur d'eau pour produire de l'hydrogène, du dioxyde de carbone et du monoxyde de carbone ;
caractérisé en ce que la vapeur d'eau issue du procédé de production de gaz de synthèse est utilisée comme source de chauffe pour la mise en œuvre de l'étape a).

Selon d'autres modes de réalisation, l'invention a aussi pour objet :
- Un procédé tel que défini précédemment, caractérisé en ce que l'étape a) consiste en un prétraitement par adsorption au moyen d'un système d'adsorption comprenant entre deux et cinq contenants d'au moins une couche d'adsorbant et au moins un dispositif de chauffage et/ou de refroidissement d'un courant d'adsorption et/ou de régénération circulant dans ledit système d'adsorption, et caractérisé en ce que la vapeur d'eau issue du procédé de production de gaz de synthèse est mise en œuvre pour réchauffer ledit courant de régénération.
- Un procédé tel que défini précédemment, caractérisé en ce que la vapeur d'eau issue du procédé de production de gaz de synthèse est mise en œuvre pour réchauffer le courant de régénération ayant déjà traversé ledit système d'adsorption et l'éloigner du point de rosée.
- Un procédé tel que défini précédemment, caractérisé en ce qu'au cours de l'étape a'), tous les dérivés soufrés contenus dans le gaz d'alimentation sont transformés en H₂S par catalyse dans un réacteur.
- Un procédé tel que défini précédemment, caractérisé en ce que le produit H₂S est extrait par catalyse.
- Un procédé tel que défini précédemment, caractérisé en ce que les impuretés susceptibles de geler au cours du procédé de liquéfaction éliminées au cours de l'étape a) comprennent l'eau, le dioxyde de carbone et les dérivés soufrés contenus dans le gaz d'alimentation
- Un procédé tel que défini précédemment, caractérisé en ce qu'au cours de l'étape c), le courant de gaz naturel appauvri en hydrocarbures ayant plus de deux atomes de carbone issu de l'étape b) est liquéfié à une température inférieure à -140°C au moyen d'unité de liquéfaction de gaz naturel comprenant au moins un échangeur de chaleur principal et un système de production de frigories.
- Un procédé tel que défini précédemment, caractérisé en ce que le courant d'alimentation de gaz naturel mis en œuvre à l'étape a) et le courant d'alimentation de gaz naturel mis en œuvre à l'étape a') proviennent d'un même courant d'alimentation de gaz naturel.
- Un procédé tel que défini précédemment, caractérisé en ce que l'unité de production de gaz de synthèse est une unité de production d'hydrogène par reformage à la vapeur ayant une capacité de production d'hydrogène d'au moins 20,000 Nm³/h.

Le courant d'hydrocarbures à liquéfier est généralement un flux de gaz naturel obtenu à partir d'un réseau de gaz domestique distribué via des pipelines.

L'expression "gaz naturel" telle qu'utilisée dans la présente demande se rapporte à toute composition contenant des hydrocarbures dont au moins du méthane. Cela comprend une composition « brute » (préalablement à tout traitement ou lavage), ainsi que toute composition ayant été partiellement, substantiellement ou entièrement traitée pour la réduction et/ou élimination d'un ou plusieurs composés, y compris, mais sans s'y limiter, le soufre, le dioxyde de carbone, l'eau, le mercure et certains hydrocarbures lourds et aromatiques.

L'échangeur de chaleur peut être tout échangeur thermique, toute unité ou autre agencement adapté pour permettre le passage d'un certain nombre de flux, et ainsi permettre un échange de chaleur direct ou indirect entre une ou plusieurs lignes de fluide réfrigérant, et un ou plusieurs flux d'alimentation.

Habituellement, le flux de gaz naturel est composé essentiellement de méthane. De préférence, le courant d'alimentation comprend au moins 80% mol de méthane. En fonction de la source, le gaz naturel contient des quantités d'hydrocarbures plus lourds que le méthane, tels que par exemple l'éthane, le propane, le butane et le pentane ainsi que certains hydrocarbures aromatiques. Le flux de gaz naturel contient également des produits non-hydrocarbures tels que l'azote (teneur variable mais de l'ordre de 5% mol par exemple) ou d'autres impuretés H₂O, CO₂, H₂S et d'autres composés soufrés, le mercure et autres (0,5% à 5% mol environ).

Le flux d'alimentation contenant le gaz naturel est donc prétraité avant d'être l'introduit dans l'échangeur de chaleur. Ce prétraitement comprend la réduction et/ou l'élimination des composants indésirables tels que généralement le CO₂ et le H₂O mais aussi H₂S et d'autres composés soufrés ou le mercure.

Afin d'éviter le gel de ces derniers au cours de la liquéfaction du gaz naturel et/ou le risque d'endommagement des équipements situés en aval (par des phénomènes de corrosion par exemple), il convient de les retirer.

Les avantages d'un tel procédé selon l'invention sont décrits ci-après.

Ce procédé de séparation exploite le fait que sous certaines conditions de pression et de température certains constituants du gaz (CO₂, H₂O en particulier) ont des affinités particulières vis-à-vis d'un matériau solide, l'adsorbant (des tamis moléculaires par exemple).

L'adsorption est un processus réversible et il est possible de régénérer l'adsorbant en abaissant la pression et/ou élevant la température de l'adsorbant pour libérer les constituants du gaz adsorbés.

Ainsi, en pratique, un système de séparation par adsorption est constitué de plusieurs (entre deux et cinq) « bouteilles » contenant une ou plusieurs couches d'adsorbants ainsi que des appareils dédiés au chauffage/refroidissement du courant d'adsorption et/ou de régénération.

Par rapport à un lavage aux amines classique, le pré-traitement présente un certain nombre d'avantages :
- son coût ;
- sa simplicité d'opération ;
- la possibilité d'éviter un certain nombre d'utilités (l'appoint en amine ou en eau déminéralisée).

Ces avantages sont particulièrement importants pour des unités de liquéfaction de gaz naturel de petites tailles (produisant par exemple moins de 50 000 tonnes de gaz naturel liquéfié par an).

Son principal inconvénient est de trouver le courant nécessaire à la régénération (15% du débit traité environ). Grâce à l'intégration avec l'unité de production d'hydrogène, il est possible de régénérer les bouteilles par le courant de gaz traité et de le renvoyer à l'unité de production d'hydrogène (système de fuel ou courant d'alimentation).

Cette option n'aurait pas été possible sans intégration car elle aurait signifié une perte importante de gaz naturel.

Un exemple de mise en œuvre est illustré par l'exemple suivant.

Une unité de reformage à la vapeur d'une capacité nominale de production d'hydrogène de 130 000 Nm3/h environ est mise en œuvre. Cette unité, alimentée par du gaz naturel, exporte de la vapeur à deux niveaux de pression :
1. 55 tonnes par heure de vapeur surchauffée à haute pression (45 bara environ) pour une température de l'ordre de 300°C (issue de l'étape de reformage du gaz de synthèse).
2. 35 tonnes par heure de vapeur à moyenne pression (12 bara environ) (issue de l'étape de pré-reformage du gaz de synthèse).

Habituellement la vapeur générée est renvoyée dans un/des réseau(x) dédié(s) pour divers utilisateurs.

En plaçant une petite unité de production de gaz naturel liquéfié d'une capacité de 40 000 tonnes de gaz naturel liquéfié produit par année à proximité de l'unité de production d'hydrogène, il est possible de valoriser tout ou partie de la vapeur à haute pression dans cette unité puis de renvoyer la vapeur utilisée dans le réseau moyenne pression

Dans ce cas, il faudrait par exemple :
▪ Environ 6 tonnes par heure de vapeur comme source de chauffe pour le prétraitement du gaz naturel (adsorption par exemple), situé en amont du liquéfacteur ;
▪ Environ 45 tonnes par heure pour entrainer les compresseurs du cycle de production de frigories via des turbines à vapeur à contre-pression.
▪ Le reliquat de vapeur est utilisé pour vaporiser les hydrocarbures lourds extraits du liquéfacteur de gaz naturel (quantité de vapeur nécessaire inférieure à 1 tonne par heure) ou pour réchauffer les vapeurs de gaz naturel générées au niveau du stockage de gaz naturel liquéfié et/ou de la baie de chargement (quantité de vapeur nécessaire inférieure à 1 tonne par heure) avant leur envoi dans le réseau fuel.

Cette intégration permet de limiter le nombre d'équipements nécessaires à l'unité de liquéfaction de gaz naturel (et donc de gagner en compétitivité).

Dans les cas où la vapeur exportée est faiblement valorisée, le gain sur l'énergie électrique économisée par le replacement des moteurs électriques par des turbines à vapeur peut être estimé à plusieurs millions d'euros sur l'énergie électrique ainsi économisée par année.

En outre, le/les niveaux de pression et de température de la vapeur disponible varient d'une unité de production à l'autre. Il est possible d'ajuster les quantités de vapeur générées par l'unité de production d'hydrogène en modifiant les conditions opératoires ou de condenser la vapeur exportée pour récupérer de l'énergie pouvant par exemple permettre de produire de l'électricité dans une turbine.

Il est alors possible que les unités de production de gaz de synthèse et de liquéfaction de gaz naturel aient en commun l'ensemble des commodités du site en particulier :
- La connexion au réseau de gaz naturel ;
- La station de comptage et éventuellement détente/compression ;
- Un réseau de torche chaude et éventuellement de liquides froids ;
- L'ensemble des utilités du site (électricité, circuit de refroidissement, air instrumentation, azote...) ;
- Le réseau d'alimentation.

De plus, dans le cas où l'unité de production de gaz de synthèse produit de l'hydrogène, il est parfois demandé de liquéfier tout ou partie de l'hydrogène pour faciliter son transport ou son stockage par exemple. Dans ce cas, il est possible de « pré-refroidir » l'hydrogène produit dans le liquéfacteur de gaz naturel jusqu'à une température de -160°C par exemple, puis d'achever de le liquéfier dans une unité dédiée.

## Revendications

1. Procédé de liquéfaction de gaz naturel en combinaison d'un procédé de production de gaz de synthèse, le procédé de liquéfaction comprenant les étapes suivantes :
- Etape a) : prétraitement d'un gaz naturel d'alimentation afin d'éliminer les impuretés susceptibles de geler au cours du procédé de liquéfaction ;
- Etape b) : extraction, à partir du courant gazeux issu de l'étape a), d'un courant enrichi en hydrocarbures ayant plus de deux atomes de carbone ;
- Etape c) : liquéfaction du courant gazeux appauvri en hydrocarbures ayant plus de deux atomes de carbone issu de l'étape b) ;
le procédé de production de gaz de synthèse comprenant les étapes suivantes :
- Etape a') : désulfurisation à une température supérieure à 350°C d'un courant d'alimentation de gaz naturel ;
- Etape b') : pré-réformage facultatif, à une température supérieure à 500°C afin de convertir les chaînes hydrocarbures contenant au moins deux atomes de carbone du courant gazeux issu de l'étape a') en méthane ;
- Etape c') : réformage consistant à faire réagir à une température supérieure à 800°C le courant gazeux issu de l'étape a') ou b') avec de la vapeur d'eau pour produire de l'hydrogène, du dioxyde de carbone et du monoxyde de carbone ;
**caractérisé en ce que** la vapeur d'eau issue du procédé de production de gaz de synthèse est utilisée comme source de chauffe pour la mise en œuvre de l'étape a) ; et **caractérisé en ce que** l'étape a) consiste en un prétraitement par adsorption au moyen d'un système d'adsorption comprenant entre deux et cinq contenants d'au moins une couche d'adsorbant et au moins un dispositif de chauffage et/ou de refroidissement d'un courant d'adsorption et/ou de régénération circulant dans ledit système d'adsorption, et **caractérisé en ce que** la vapeur d'eau issue du procédé de production de gaz de synthèse est mise en œuvre pour réchauffer ledit courant de régénération.

2. Procédé selon la revendication précédente, **caractérisé en ce que** la vapeur d'eau issue du procédé de production de gaz de synthèse est mise en œuvre pour réchauffer le courant de régénération ayant déjà traversé ledit système d'adsorption et l'éloigner du point de rosée.

3. Procédé selon l'une des revendications précédentes, **caractérisé en ce qu'**au cours de l'étape a'), tous les dérivés soufrés contenus dans le gaz d'alimentation sont transformés en H₂S par catalyse dans un réacteur.

4. Procédé selon la revendication 3, **caractérisé en ce que** le produit H₂S est extrait par catalyse.

5. Procédé selon l'une des revendications précédentes, **caractérisé en ce que** les impuretés susceptibles de geler au cours du procédé de liquéfaction éliminées au cours de l'étape a) comprennent l'eau, le dioxyde de carbone et les dérivés soufrés contenus dans le gaz d'alimentation.

6. Procédé selon l'une des revendications précédentes, **caractérisé en ce qu'**au cours de l'étape c), le courant de gaz naturel appauvri en hydrocarbures ayant plus de deux atomes de carbone issu de l'étape b) est liquéfié à une température inférieure à -140°C au moyen d'unité de liquéfaction de gaz naturel comprenant au moins un échangeur de chaleur principal et un système de production de frigories.

7. Procédé selon l'une des revendications précédentes, **caractérisé en ce que** le courant d'alimentation de gaz naturel mis en œuvre à l'étape a) et le courant d'alimentation de gaz naturel mis en œuvre à l'étape a') proviennent d'un même courant d'alimentation de gaz naturel.

8. Procédé selon l'une des revendications précédentes, **caractérisé en ce que** l'unité de production de gaz de synthèse est une unité de production d'hydrogène par reformage à la vapeur ayant une capacité de production d'hydrogène d'au moins 20,000 Nm³/h.

## Patentansprüche

1. Verfahren zur Erdgasverflüssigung in Kombination mit einem Synthesegaserzeugungsverfahren, wobei das Verflüssigungsverfahren die folgenden Schritte umfasst:
- Schritt a): Vorbehandeln eines Versorgungserdgases, um die Verunreinigungen zu beseitigen, die im Laufe des Verflüssigungsverfahrens gefrieren können;
- Schritt b): Extrahieren aus dem gasförmigen Strom aus Schritt a) eines Stroms, der mit Kohlenwasserstoffen, aufweisend mehr als zwei Kohlenstoffatome, angereichert ist,
- Schritt c): Verflüssigen des gasförmigen Stroms aus Schritt b), der mit Kohlenwasserstoffen, aufweisend mehr als zwei Kohlenstoffatome, abgereichert ist;
wobei das Verfahren zur Synthesegaserzeugung die folgenden Schritte umfasst:
- Schritt a'): Entschwefeln bei einer Temperatur von mehr als 350 °C eines Erdgasversorgungsstroms;
- Schritt b'): wahlweises Vorreformieren bei einer Temperatur von mehr als 500 °C, um die Kohlenwasserstoffketten, die mindestens zwei Kohlenstoffatome des gasförmigen Stroms aus Schritt a') enthalten, zu Methan umzuwandeln;
- Schritt c'): Reformieren, das darin besteht, den gasförmigen Strom aus Schritt a') oder b') bei einer Temperatur von mehr als 800 ºC mit Wasserdampf reagieren zu lassen, um Wasserstoff, Kohlendioxid und Kohlenmonoxid zu erzeugen; **dadurch gekennzeichnet, dass** der Wasserdampf aus dem Synthesegaserzeugungsverfahren als Erhitzungsquelle zum Implementieren von Schritt a) verwendet wird; und **dadurch gekennzeichnet, dass** Schritt a) aus einer Vorbehandlung durch Adsorption mit Hilfe eines Adsorptionssystems besteht, umfassend zwischen zwei und fünf Behältnisse mindestens einer adsorbierenden Schicht, und mindestens eine Vorrichtung zum Erhitzen und/oder Abkühlen eines Stroms zur Adsorption und/oder Regeneration, der in dem Adsorptionssystem zirkuliert, und **dadurch gekennzeichnet, dass** der Wasserdampf aus dem Synthesegaserzeugungsverfahren implementiert wird, um den Regenerationsstrom zu erhitzen.

2. Verfahren nach dem vorstehenden Anspruch, **dadurch gekennzeichnet, dass** der Wasserdampf aus dem Synthesegaserzeugungsverfahren implementiert wird, um den Regenerationsstrom zu erhitzen, der das Adsorptionssystem bereits durchlaufen hat, und vom Kondensationspunkt zu entfernen.

3. Verfahren nach einem der vorstehenden Ansprüche, **dadurch gekennzeichnet, dass** im Laufe von Schritt a') alle geschwefelten Derivate, die im Versorgungsgas enthalten sind, durch Katalyse in einem Reaktor zu H₂S umgewandelt werden.

4. Verfahren nach Anspruch 3, **dadurch gekennzeichnet, dass** das produzierte H₂S durch Katalyse extrahiert wird.

5. Verfahren nach einem der vorstehenden Ansprüche, **dadurch gekennzeichnet, dass** die Verunreinigungen, die im Laufe des Verflüssigungsverfahrens gefrieren können, die im Laufe von Schritt a) eliminiert werden, Wasser, Kohlendioxid und geschwefelte Derivate umfassen, die im Versorgungsgas enthalten sind.

6. Verfahren nach einem der vorstehenden Ansprüche, **dadurch gekennzeichnet, dass** im Laufe von Schritt c) der Erdgasstrom aus Schritt b), der mit Kohlenwasserstoffen, aufweisend mehr als zwei Kohlenstoffatome, abgereichert ist, bei einer Temperatur von weniger als -140 °C mit Hilfe einer Erdgasverflüssigungseinheit, umfassend mindestens einen Hauptwärmeaustauscher und eines Systems zur Erzeugung von Frigorien, verflüssigt wird.

7. Verfahren nach einem der vorstehenden Ansprüche, **dadurch gekennzeichnet, dass** der Erdgasversorgungsstrom, implementiert in Schritt a), und der Erdgasversorgungsstrom, implementiert in Schritt a'), aus einem gleichen Erdgasversorgungsstrom stammen.

8. Verfahren nach einem der vorstehenden Ansprüche, **dadurch gekennzeichnet, dass** die Synthesegaserzeugungseinheit eine Einheit zur Erzeugung von Wasserstoff durch Reformieren mit dem Dampf ist, der eine Wasserstofferzeugungskapazität von mindestens 20.000 Nm³/h aufweist.

## Claims

1. Method for liquefying natural gas in combination with a method for producing synthetic gas, the liquefaction method comprising the following steps:
- Step a): pre-treating a natural supply gas in order to remove the impurities likely to freeze during the liquefaction method;
- Step b): extracting, from the gaseous current from step a), a hydrocarbon-enriched current having more than two carbon atoms;
- Step c): liquefying the hydrocarbon-depleted gaseous current having more than two carbon atoms from step b);
the step of producing synthetic gas comprising the following steps:
- Step a'): desulfurising at a temperature greater than 350°C of a natural gas supply current;
- Step b'): optional pre-reforming, at a temperature greater than 500°C in order to convert the hydrocarbon chains containing at least two carbon atoms of the gaseous current from step a') into methane;
- Step c'): reforming consisting of making the gaseous current from step a') or b') react at a temperature greater than 800°C with steam to produce hydrogen, carbon dioxide and carbon monoxide;
**characterised in that** the steam from the method for producing synthetic gas is used as a source of heat for the implementation of step a); and **characterised in that** step a) consists of a pre-treatment by adsorption by means of an adsorption system comprising between two and five containers of at least one adsorbent layer and at least one device for heating and/or cooling an adsorption and/or regeneration current circulating in said adsorption system, and **characterised in that** the steam from the method for producing synthetic gas is implemented to heat said regeneration current.

2. Method according to the preceding claim, **characterised in that** the steam from the method for producing synthetic gas is implemented to heat the regeneration current having already passed through said adsorption system and to move away from the dew point temperature.

3. Method according to one of the preceding claims, **characterised in that** during step a'), all the sulphurous derivatives contained in the supply gas are transformed into H₂S by catalysis in a reactor.

4. Method according to claim 3, **characterised in that** the H₂S product is extracted by catalysis.

5. Method according to one of the preceding claims, **characterised in that** the impurities likely to freeze during the liquefaction method removed during step a) comprise water, carbon dioxide and the sulphurous derivatives contained in the supply gas.

6. Method according to one of the preceding claims, **characterised in that** during step c), the hydrocarbon-depleted natural gas current having more than two carbon atoms from step b) is liquefied at a temperature less than -140°C by means of a natural gas liquefaction unit comprising at least one main heat exchanger and a system for producing frigories.

7. Method according to one of the preceding claims, **characterised in that** the natural gas supply current implemented in step a) and the natural gas supply current implemented in step a') originate from one same natural gas supply current.

8. Method according to one of the preceding claims, **characterised in that** the unit for producing synthetic gas is a unit for producing hydrogen by reforming with steam, having a hydrogen production capacity of at least 20,000Nm³/h.
